# FASCICULE DE BREVET EUROPEEN

(11) **EP 0 750 172 B1**
(45) Date de publication et mention de la délivrance du brevet: **11.04.2001**
(21) Numéro de dépôt: 96401355.1
(22) Date de dépôt: 20.06.1996
(51) Int. Cl.: G01B 5/20, G01B 7/28

(54) **Calibre étalon pour l'étalonnage d'un appareil de lecture de contour pour monture de lunettes, et procédé d'étalonnage correspondant**
Eichkaliber zum Eichen einer Konturlesevorrichtung für Brillenfassung und entsprechendes Eich-Verfahren
Caliper gage for calibrating a reading apparatus of a spectacle frame shape and calibrating method therefore

(30) Priorité: 23.06.1995 FR 9507555
(43) Date de publication de la demande: 27.12.1996
(73) Titulaire: ESSILOR INTERNATIONAL (Compagnie Générale d'Optique), F-94220 Charenton-le-Pont (FR)
(72) Inventeur: Guillermin, Laurent, 75012 Paris (FR); Hougas, Henri, 77020 Ozoir la Ferriere (FR); Horel, Patrick, 92300 Levallois Perret (FR)
(74) Mandataire: CABINET BONNET-THIRION

(56) Documents cités:
- EP-A- 0 424 207
- EP-A- 0 583 915
- EP-A- 0 639 754
- FR-A- 2 669 999
- PATENT ABSTRACTS OF JAPAN vol. 018, no. 679 (M-1728), 21 Décembre 1994 & JP 06 270046 A (TOPCON CORP), 27 Septembre 1994,

## Description

La présente invention concerne d'une manière générale l'étalonnage auquel il faut procéder à la mise en route d'un appareil de lecture de contour pour monture de lunettes pour disposer d'une référence précise pour ses divers paramètres, étant entendu que cet étalonnage peut évidemment être ensuite périodiquement renouvelé si désiré.

Elle a plus précisément pour objet l'étalonnage d'un appareil de lecture de contour pour monture de lunettes comportant, d'une part, deux mâchoires, qui sont globalement allongées, parallèlement l'une à l'autre, et dont une, au moins, est mobile par rapport à l'autre transversalement par rapport à leur direction d'allongement, et, d'autre part, un palpeur, qui est porté par un chariot de lecture monté mobile linéairement sur une platine, cette platine étant elle-même montée rotative angulairement sur un chariot de transfert monté mobile linéairement suivant un trajet globalement parallèle à la direction d'allongement des mâchoires.

Pour ce qui concerne les mâchoires, un appareil de lecture de contour de ce genre se trouve notamment décrit dans le brevet français qui, déposé le 7 mai 1991, sous le No 91 05619, a été publié sous le No 2 665 387.

Pour ce qui concerne le palpeur, un appareil de lecture de contour du genre concerné se trouve notamment décrit dans le brevet français qui, déposé le 6 octobre 1989, sous le No 89 13079, a été publié sous le No 2 652 893.

Cet appareil de lecture de contour intervient en pratique en coordonnées polaires pour relever la position du palpeur, le chariot de lecture portant ce palpeur donnant le rayon de ces coordonnées polaires tandis que la platine rotative portant ce chariot de lecture en donne l'angle.

Les difficultés, en l'espèce, tiennent à ce que la position, par rapport au centre de la platine rotative, choisie comme centre des coordonnées polaires, de la partie utile du palpeur, c'est-à-dire de la pointe de celui-ci, n'est pas connue avec toute la certitude souhaitable, à ce qu'il en est de même de la position, par rapport au bâti de l'ensemble, de la mâchoire, qui, destinée à porter sur la partie inférieure de la monture de lunettes dont le contour est à lire, est choisie pour servir d'axe de référence, et à ce qu'il n'y a pas nécessairement un parallélisme rigoureux entre, d'une part, cette mâchoire, et, d'autre part, le trajet du chariot de transfert permettant au palpeur de passer de l'un à l'autre des deux cercles ou entourages de la monture de lunettes.

Un tel éventuel manque de parallélisme peut intempestivement induire une différence d'"altitude" dans les lectures faites successivement sur l'un et l'autre de ces cercles ou entourages.

Pour surmonter ces difficultés, il est nécessaire de procéder à l'étalonnage de l'appareil de lecture de contour.

La présente invention a précisément pour objet un calibre étalon propre à un tel étalonnage et le procédé, d'étalonnage impliquant la mise en oeuvre de ce calibre étalon selon les revendications.

La deuxième direction du calibre étalon suivant l'invention étant en pratique parallèle à la direction d'allongement des mâchoires de l'appareil de lecture de contour, les deux nervures transversales de ce calibre étalon permettent de relever deux cotes, l'une de l'un à l'autre des flancs internes de ces nervures transversales, l'autre de l'un à l'autre de leurs flancs externes, et, à l'aide de ces cotes, il est possible de résoudre les deux équations à deux inconnues donnant les paramètres de référence du chariot de lecture portant le palpeur, et, partant, de connaître exactement la position de la pointe de ce palpeur par rapport au centre de la platine rotative portant ce chariot de lecture.

Le calibre étalon suivant l'invention est encore caractérisé en ce qu'il présente, en outre, en saillie sur sa plaquette, au moins une autre nervure, dite ci-après par simple commodité nervure longitudinale, allongée suivant sa deuxième direction, et, donc suivant la direction d'allongement des mâchoires de l'appareil de lecture de contour.

En pratique, deux nervures longitudinales sont prévues, parallèlement l'une à l'autre.

Elles permettent de contrôler la direction de la mâchoire servant d'axe de référence pour l'ensemble.

Elles permettent, également, de contrôler le parallélisme du trajet du chariot de transfert vis-à-vis de cette mâchoire.

Globalement, les opérations nécessaires à l'étalonnage de l'appareil de lecture de contour à contrôler se trouvent ainsi avantageusement simplifiées.

Les caractéristiques et avantages de l'invention ressortiront d'ailleurs de la description qui va suivre, à titre d'exemple, en référence aux dessins schématiques annexés sur lesquels :
la figure 1 est, avec un arrachement local, une vue en plan, simplifiée, des mâchoires et du palpeur d'un appareil de lecture de contour pour monture de lunettes auquel s'applique l'invention ;
la figure 2 est, également simplifiée, une vue en plan des constituants de cet appareil de lecture de contour assurant le déplacement de son palpeur en coordonnées polaires ;
la figure 3 est, à échelle différente, une vue en perspective du calibre étalon suivant l'invention ;
la figure 4 est une vue de dessous de ce calibre étalon, supposé en place sur l'appareil de lecture de contour à contrôler, pour une première phase de l'étalonnage de celui-ci ;
la figure 5 est, avec un arrachement local, une vue de côté, suivant la flèche V de la figure 4 ;
les figures 6, 7 sont des vues qui, analogues, chacune respectivement, à celles des figures 4, 5, se rapportent à une autre phase de l'étalonnage de l'appareil de lecture de contour ;
les figures 8, 9 sont des vues partielles de dessous, analogues à celles des figures 5, 7, pour d'autres phases de cet étalonnage ;
les figures 10, 11 sont des vues qui, analogues, chacune respectivement, à celles des figures 4, 5, illustrent une autre possibilité d'utilisation du calibre d'étalon suivant l'invention.

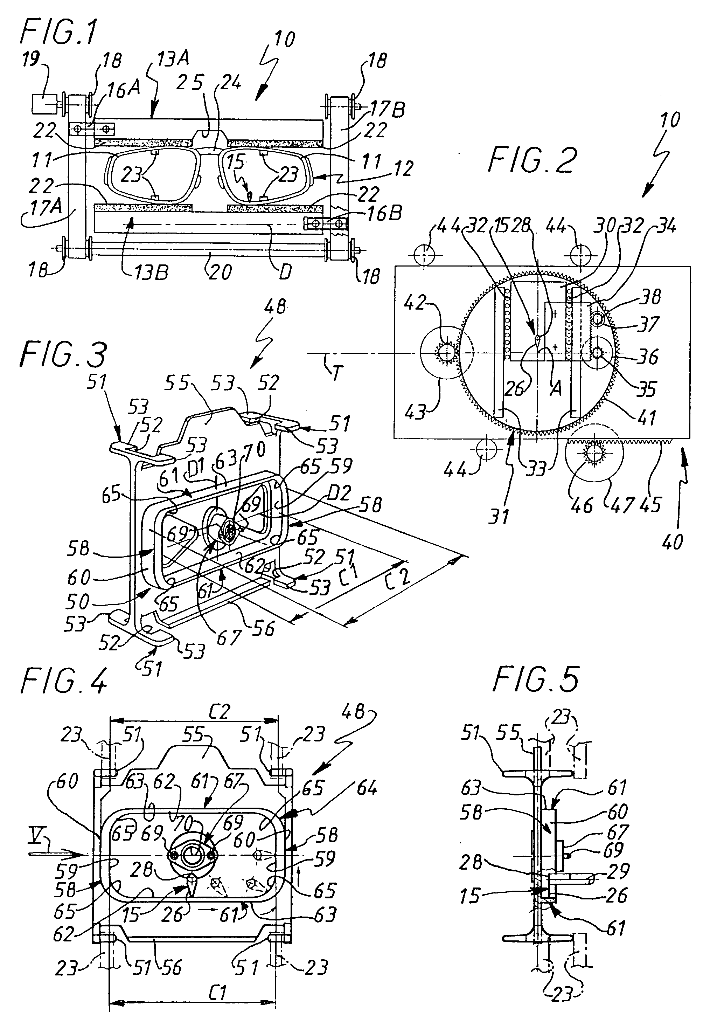

Tel que schématisé sur la figure 1, l'appareil de lecture de contour 10 auquel s'applique l'invention est plus particulièrement destiné à la lecture de contour de l'un et de l'autre des deux cercles ou entourages 11 d'une quelconque monture de lunettes 12.

Il comporte, globalement, d'une part, pour le maintien de la monture de lunettes 12, deux mâchoires 13A, 13B et, d'autre part, pour la lecture à assurer, un palpeur 15.

Les deux mâchoires 13A, 13B sont globalement allongées parallèlement l'une à l'autre, suivant une direction d'allongement D schématisée en traits interrompus sur la figure 1.

Pour être en mesure d'enserrer entre elles la monture de lunettes 12, suivant le plan général du face de celle-ci, l'une au moins des mâchoires 13A, 13B est montée mobile par rapport à l'autre transversalement par rapport à leur direction d'allongement D.

Dans la forme de réalisation représentée, l'une et l'autre des mâchoires 13A, 13B sont montées mobiles transversalement par rapport à la direction d'allongement D.

Elles sont, pour ce faire, chacune respectivement attelées, par une attache 16A, 16B, à deux courroies 17A, 17B, qui, globalement allongées perpendiculairement à la direction d'allongement D, sont elles-mêmes chacune passées en boucle sans fin sur des organes de renvoi 18.

Pour la commande en synchronisme de l'ensemble, l'un des organes de renvoi 18 de la courroie 17A est calé en rotation sur l'arbre de sortie d'un moteur d'entraînement 19, tandis que l'autre est calé en rotation sur un arbre de transmission 20 sur lequel se trouve également calé en rotation l'organe de renvoi 18 correspondant de la courroie 17B.

Pour que les mâchoires 13A, 13B se déplacent en sens inverse l'une par rapport à l'autre, l'attache 16A de la mâchoire 13A est attelée au brin supérieur de la courroie 17A, tandis que l'attache 16B de la mâchoire 13B est attelée au brin inférieur de la courroie 17B.

Dans la forme de réalisation représentée, les mâchoires 13A, 13B, portent, chacune, en saillie, à distance l'un de l'autre, pour contact avec les cercles ou entourages 11 de la monture de lunettes 12 à enserrer, deux blocs d'appui 22.

Conjointement, pour le maintien de la monture de lunettes 12 perpendiculairement au plan des mâchoires 13A, 13B, il est associé, dans la forme de réalisation représentée, à chacune de ces mâchoires 13A, 13B, au niveau de chacun de leurs blocs d'appui 22, deux doigts de serrage 23, qui sont échelonnés en hauteur perpendiculairement à ce plan, et dont un, au moins, est mobile par rapport à l'autre.

En pratique, dans la mise en oeuvre représentée, la mâchoire 13A est destinée à intervenir sur la partie supérieure de la monture de lunettes 12, c'est-à-dire du côté du pontet ou nez 24 de celle-ci, et elle sera pour cette raison appelée mâchoire supérieure dans ce qui suit.

Dans la forme de réalisation représentée, et pour des raisons qui apparaîtront ultérieurement, cette mâchoire 13A supérieure présente, en creux, dans sa partie médiane, entre ses blocs d'appui 22, un dégagement 25, de contour globalement trapézoïdal.

La mâchoire 13B étant, elle, destinée à intervenir sur la partie inférieure de la monture de lunettes 12, elle sera appelée mâchoire inférieure dans ce qui suit.

En pratique, cette mâchoire 13B inférieure sert d'axe de référence pour l'ensemble.

Le palpeur 15, qui présente, en positions diamétralement opposées l'une par rapport à l'autre, une pointe 26 et un talon 28, intervient en bout d'une tige de support 29 montée mobile suivant son axe, figure 5, et, par l'intermédiaire de cette tige de support 29, il est porté par un chariot de lecture 30 monté mobile linéairement sur une platine 31, figure 2.

Par exemple, et tel que schématisé sur la figure 2, le chariot de lecture 30 est en prise, par l'intermédiaire de roulements 32, avec deux glissières parallèles 33 solidaires de la platine 31.

Pour sa commande, il est équipé d'une crémaillère 34 avec laquelle engrène un pignon 35 calé sur l'arbre de sortie d'un moteur d'entraînement 36.

Pour son repérage, il lui est associé un codeur 37.

Dans la forme de réalisation représentée, ce codeur 37 engrène avec la crémaillère 34 par un pignon 38.

Mais, en variante, il pourrait tout aussi bien être commandé par le moteur d'entraînement 36.

La platine 31 a un contour circulaire, et elle est montée rotative, circulairement, sur un chariot de transfert 40 monté mobile linéairement suivant un trajet T globalement parallèle à la direction d'allongement D des mâchoires 13A, 13B.

Soit A l'axe de rotation de la platine 31.

Cet axe A est schématisé par sa trace sur la figure 2.

De même, le trajet T du chariot de transfert 40 est schématisé en traits interrompus sur cette figure 2.

Pour sa commande, la platine 31 est équipée, à sa périphérie, d'une crémaillère 41, par laquelle elle engrène avec un pignon 42 calé sur l'arbre de sortie d'un moteur d'entraînement 43.

Pour son guidage, le chariot de transfert 40 est par exemple en prise avec des galets 44, tel que schématisé sur la figure 2.

Pour son entraînement, il est équipé d'une crémaillère 45, par laquelle il engrène avec un pignon 46 calé sur l'arbre de sortie d'un moteur d'entraînement 47.

Les dispositions qui précèdent sont, soit bien connues par elles-mêmes, soit du domaine de l'homme de l'art.

Ne relevant pas, en outre, de la présente invention, elles ne seront pas décrites plus en détail, ici.

Suivant l'invention, il est mis en oeuvre, pour l'étalonnage de l'appareil de lecture de contour 10, un calibre étalon 48.

Ce calibre étalon 48 est destiné à être mis en place sur l'appareil de lecture de contour 10 à étalonner, à la place d'une monture de lunettes 12.

Il comporte une plaquette 50, de contour globalement rectangulaire, avec, perpendiculairement à cette plaquette 50, le long d'un au moins des bords de celle-ci, un retour 51, qui s'étend de part de d'autre de la plaquette 50, et qui, au droit de celle-ci, présente une encoche 52 le fractionnant en deux pattes 53.

En pratique, dans la forme de réalisation représentée, quatre retours 51 fractionnés en pattes 53 sont prévus, à raison d'un par angle de la plaquette 50.

Ils sont destinés à coopérer, chacun respectivement, avec les doigts de serrage 23 de l'appareil de lecture de contour 10, l'un des doigts de serrage 23 correspondants s'insérant dans leur encoche 52, tandis que l'autre porte sur l'une de leurs pattes 53, tel que schématisé en traits interrompus sur la figure 4.

Dans la forme de réalisation représentée, les pattes 53 des retours 51 sont dirigées vers l'intérieur.

Mais, en variante, elles pourraient tout aussi bien être dirigées vers l'extérieur.

Quoi qu'il en soit, les retours 51 sont coplanaires deux à deux, aux extrémités de deux bords opposés de la plaquette 50.

Il s'agit, en pratique, des bords longitudinaux de cette plaquette 50, c'est-à-dire des bords de cette plaquette 50 destinés à être parallèles aux mâchoires 13A, 13B de l'appareil de lecture de contour 10.

Dans la forme de réalisation représentée, la plaquette 50 comporte, localement, le long d'un de ces bords longitudinaux, en saillie sur sa tranche, un prolongement de centrage 55, qui, destiné à venir en prise avec le dégagement 25 de la mâchoire 13A de l'appareil de lecture de contour 10, a, à l'image de celui-ci, un contour globalement trapézoïdal.

Le long de l'autre des bords longitudinaux de la plaquette 50, le calibre étalon 48 selon l'invention présente, dans la forme de réalisation représentée, en saillie sur l'une des faces de cette plaquette 50, entre les retours 51 correspondants de celle-ci, un rebord 56, pour son appui sur la mâchoire 13B inférieure de l'appareil de lecture de contour 10, et, plus précisément, sur les blocs d'appui 22 de cette mâchoire 13B.

Dans la zone médiane de la plaquette 50, le calibre étalon 48 suivant l'invention présente, en saillie sur cette plaquette 50, sur la même face de celle-ci que le rebord 56, au moins deux nervures 58, dites ici par simple commodité nervures transversales, qui, globalement parallèles l'une à l'autre, suivant une première direction D1 schématisée en traits interrompus sur la figure 3, sont échelonnées l'une par rapport à l'autre suivant une deuxième direction D2, également schématisée en traits interrompus sur cette figure 3.

En pratique, ces nervures transversales 58 sont rectilignes et, lorsque le calibre étalon 48 est en place sur l'appareil de lecture de contour 10, leur direction D1 est perpendiculaire à la direction d'allongement D des mâchoires 13A, 13B de celui-ci.

En pratique, également, les nervures transversales 58 ont des flancs 59, 60 droits, ces flancs 59, 60 s'étendant perpendiculairement à la plaquette 50.

Soit C1 la cote s'étendant entre leurs flancs 59 internes, et soit C2 celle s'étendant entre leurs flancs 60 externes.

Par construction, ces cotes C1, C2 sont connues de manière très précise.

Dans la forme de réalisation représentée, les nervures transversales 58 présentent l'une et l'autre une même épaisseur, mais il n'en est pas nécessairement ainsi.

En pratique, ces nervures transversales 58 s'étendent chacune respectivement à proximité des bords transversaux de la plaquette 50, et le prolongement de centrage 55 de celle-ci s'étend globalement à mi-distance d'elles.

Dans la forme de réalisation représentée, le calibre étalon 48 selon l'invention présente, en outre, en saillie sur sa plaquette 50, sur la même face de celle-ci que les nervures transversales 58, et donc que le rebord 56, au moins une autre nervure 61, dite ici par simple commodité nervure longitudinale, allongée suivant la deuxième direction D2, c'est-à-dire suivant la direction suivant laquelle sont échelonnées les nervures transversales 58.

En pratique, cette nervure longitudinale 61 est rectiligne, et, lorsque le calibre étalon 48 selon l'invention est en place sur l'appareil de lecture de contour 10, elle s'étend globalement parallèlement à la direction d'allongement D des mâchoires 13A, 13B de celui-ci.

Autrement dit, la nervure longitudinale 61 est globalement orthogonale aux nervures transversales 58.

Autrement dit, également, la direction D2 suivant laquelle les nervures transversales 58 sont échelonnées est orthogonale à la direction D1 suivant laquelle elles s'étendent.

En pratique, dans la forme de réalisation représentée, le calibre étalon 48 selon l'invention présente, en saillie sur sa plaquette 50, à distance l'une de l'autre, deux nervures longitudinales 61.

Ces nervures longitudinales 61 ont l'une et l'autre des flancs 62, 63 droits, l'un et l'autre de ces flancs 62, 63 s'étendant perpendiculairement à la plaquette 50.

Dans la forme de réalisation représentée, elles ont en outre l'une et l'autre une même épaisseur, différente de celle des nervures transversales 58 et inférieure à celle-ci, mais il n'en est pas nécessairement ainsi.

En pratique, les deux nervures transversales 58 et les deux nervures longitudinales 61 sont en continuité les unes avec les autres, et elles forment ainsi conjointement un cadre 64, dont les angles 65 sont, à leurs raccordements, largement arrondis dans la forme de réalisation représentée.

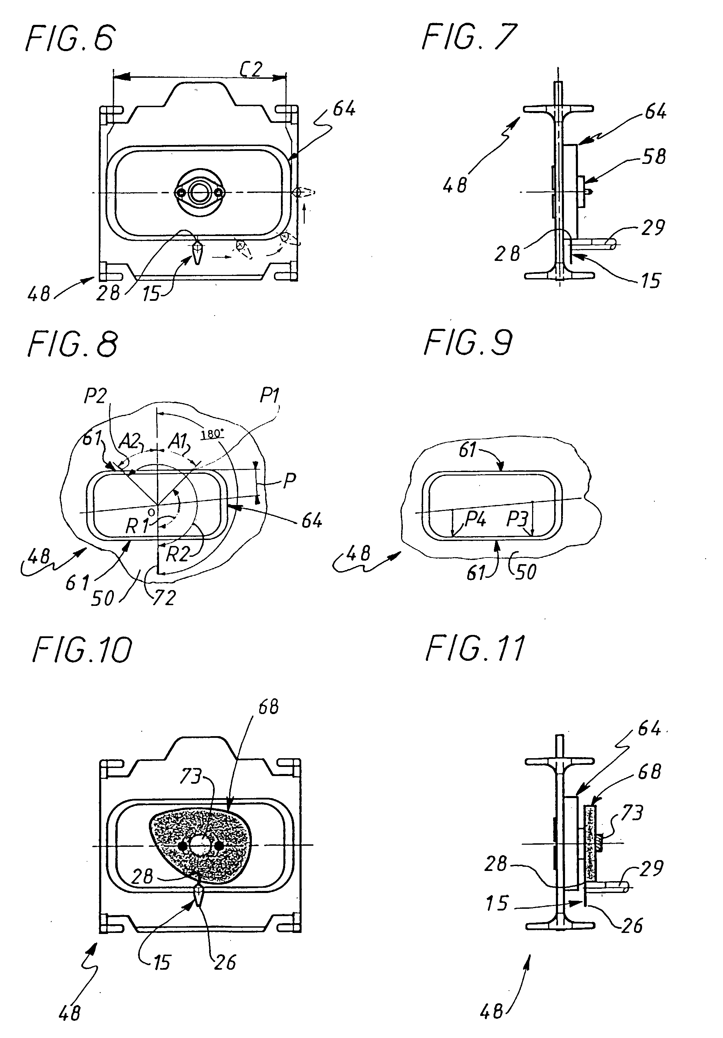

Dans la forme de réalisation représentée, le calibre étalon 48 suivant l'invention présente, enfin, en saillie sur sa plaquette 50, au centre du cadre 64, un bossage 67, qui, pour la réception d'un gabarit 68, tel que représenté sur les figures 10 et 11, est équipé, en saillie, de deux ergots 69 parallèles.

Dans la forme de réalisation représentée, ce bossage 67, comporte, axialement, entre les ergots 69, un moyeu 70 taraudé.

Par exemple, lorsque, comme en l'espèce, le calibre étalon 48 suivant l'invention est réalisé en matière synthétique, ce moyeu 70 intervient à la manière d'un insert.

Mais il n'en est pas nécessairement ainsi.

Une fois le calibre étalon 48 suivant l'invention en place sur l'appareil de lecture de contour 10 à étalonner, il peut par exemple être procédé comme suit.

Dans un premier temps, il est procédé, à l'aide du palpeur 15, et, plus précisément, à l'aide de la pointe 26 de celui-ci, à une lecture de la cote C1, tel que schématisé sur les figures 4 et 5, en intervenant à l'intérieur du cadre 64.

Dans un deuxième temps, il est procédé à une lecture de la cote C2, tel que schématisé sur les figures 6 et 7, en intervenant à l'extérieur du cadre 64, et en procédant par exemple avec le talon 28 du palpeur 15.

Chaque valeur lue dépend de la résolution du codeur 37 et s'écarte de la valeur exacte d'une erreur systématique de lecture.

Mais, à l'égard des deux paramètres que constituent cette résolution et cette erreur, les deux valeurs lues fournissent deux équations permettant de déterminer très simplement ces deux paramètres.

Tel que schématisé à la figure 8, la platine 31, qui est supposée être initialement en appui contre une butée origine 72 repérée par un trait noir sur cette figure 8, est successivement positionnée au droit de deux points P1, P2 de la nervure longitudinale 61 opposée à cette butée origine 72, le point P1 correspondant à une rotation R1 de cette platine 31 égale à 180° déduction faite d'un angle A1, et le point P2 correspondant à une rotation R2 égale à 180° adjonction faite d'un angle A2 égal à l'angle A1 précédent.

Par exemple, les angles A1, A2 sont égaux à 45°.

Quoi qu'il en soit, les points P1, P2 se trouvent symétriques l'un de l'autre par rapport à la médiatrice des nervures longitudinales 61.

Il en résulte que les lectures de position des deux points P1, P2 permettent de connaître la pente P de la nervure longitudinale 61 détectée, et, donc, l'axe de référence de l'ensemble.

Tel que schématisé à la figure 9, la lecture de deux points P3, P4 d'une nervure longitudinale 61 permet, ensuite, de contrôler le parallélisme du trajet T du chariot de transfert 40 par rapport à cet axe de référence.

Comme schématisé sur les figures 10 et 11, le calibre étalon 48 suivant l'invention peut également être utilisé comme support pour un gabarit 68 lors d'une lecture de contour de celui-ci.

Préférentiellement, ce gabarit 68 est maintenu en place par une vis 73 en prise à vissage avec le moyeu 70 taraudé.

## Revendications

1. Calibre étalon pour l'étalonnage d'un appareil de lecture de contour (10) comportant, d'une part, deux mâchoires (13A, 13B), qui sont globalement allongées parallèlement l'une à l'autre, et dont une, au moins, est mobile par rapport à l'autre transversalement par rapport à leur direction d'allongement (D), et, d'autre part, un palpeur (15), qui est porté par un chariot de lecture (30) monté mobile linéairement sur une platine (31), ladite platine (31) étant elle-même montée rotative angulairement sur un chariot de transfert (40) monté mobile linéairement suivant un trajet (T) globalement parallèle à la direction d'allongement (D) des mâchoires (13A, 13B), ce calibre étalon étant caractérisé en ce qu'il comporte :
- des moyens (51, 55) de mise en place sur l'appareil de lecture de contour (10) à étalonner, à la place d'une monture de lunettes, dans une position prédéterminée vis-à-vis des deux mâchoires (13A, 13B); et
- une plaquette (50), avec, en saillie sur celle-ci, au moins deux nervures (58), dites ici nervures transversales, qui, globalement parallèles l'une à l'autre, suivant une première direction (D1), sont échelonnées l'une par rapport à l'autre, suivant une deuxième direction (D2), lesdites nervures transversales étant, lorsque ledit calibre est ainsi en place sur l'appareil de lecture de contour, adaptées à coopérer avec le palpeur (15)

2. Calibre étalon suivant la revendication 1, caractérisé en ce que les nervures transversales (58) ont des flancs (59, 60) droits, l'un et l'autre de ces flancs (59, 60) s'étendant perpendiculairement à la plaquette (50).

3. Calibre étalon suivant l'une quelconque des revendications 1, 2 caractérisé en ce que les nervures transversales (58) sont rectilignes.

4. Calibre étalon suivant l'une quelconque des revendications 1 à 3, caractérisé en ce qu'il présente, en outre, en saillie sur sa plaquette (50), au moins une autre nervure (61), dite ici nervure longitudinale, allongée suivant la deuxième direction (D2).

5. Calibre étalon suivant la revendication 4, caractérisé en ce que la nervure longitudinale (61) a des flancs (62, 63) droits, l'un et l'autre de ces flancs (62, 63) s'étendant perpendiculairement à la plaquette (50).

6. Calibre étalon suivant l'une quelconque des revendications 4, 5, caractérisé en ce que la nervure longitudinale (61) est rectiligne.

7. Calibre étalon suivant l'une quelconque des revendications 4 à 6, caractérisé en ce que la nervure longitudinale (61) est globalement orthogonale aux nervures transversales (58).

8. Calibre étalon suivant l'une quelconque des revendications 4 à 7, caractérisé en ce qu'il présente, en saillie sur sa plaquette (50), à distance l'une de l'autre, deux nervures longitudinales (61).

9. Calibre étalon suivant la revendication 8, caractérisé en ce que les deux nervures transversales (58) et les deux nervures longitudinales (61) sont en continuité les unes avec les autres et forment ainsi conjointement un cadre (64).

10. Calibre étalon suivant la revendication 9, caractérisé en ce que les angles (65) du cadre (64) sont arrondis.

11. Calibre étalon suivant l'une quelconque des revendications 1 à 10, caractérisé en ce qu'il présente, en outre, en saillie sur sa plaquette (50), un bossage (67), qui, pour la réception d'un gabarit (68), est équipé de deux ergots (69) parallèles.

12. Calibre étalon suivant la revendication 11, caractérisé en ce que le bossage (67) comporte, axialement, entre les ergots (69), un moyeu (70) taraudé.

13. Calibre étalon suivant les revendications 9 et 11, prises conjointement, caractérisé en ce que le bossage (67) s'étend au centre du cadre (64).

14. Calibre étalon suivant l'une quelconque des revendications 1 à 13, caractérisé en ce que la plaquette (50) comporte, localement, le long d'un de ses bords, en saillie sur sa tranche, un prolongement de centrage (55).

15. Calibre étalon suivant la revendication 14, caractérisé en ce que le prolongement de centrage (55) de la plaquette (50) s'étend globalement à mi-distance des nervures transversales (58).

16. Calibre étalon suivant l'une quelconque des revendications 14, 15, caractérisé en ce que le prolongement de centrage (55) de la plaquette (50) a un contour globalement trapézoïdal.

17. Calibre étalon suivant l'une quelconque des revendications 1 à 16, caractérisé en ce qu'il comporte, perpendiculairement à sa plaquette (50), le long d'un des bords au moins de celle-ci, un retour (51), qui s'étend de part et d'autre de la plaquette (50), et qui, au droit de celle-ci, présente une encoche (52) le fractionnant en deux pattes (53).

18. Calibre étalon suivant la revendication 17, caractérisé en ce qu'il présente quatre retours (51) fractionnés en pattes (53), à raison d'un retour (51) par angle de la plaquette (50).

19. Procédé pour l'étalonnage d'un appareil de lecture de contour (10) comportant, d'une part, deux mâchoires (13A, 13B), qui sont globalement allongées parallèlement l'une à l'autre, et dont une, au moins, est mobile par rapport à l'autre transversalement par rapport à leur direction d'allongement (D), et, d'autre part, un palpeur (15), qui est porté par un chariot de lecture (30) monté mobile linéairement sur une platine (31), ladite platine (31) étant elle-même montée rotative angulairement sur un chariot de transfert (40) monté mobile linéairement suivant un trajet (T) globalement parallèle à la direction d'allongement (D) des mâchoires (13A, 13B) ; caractérisé en ce qu'on met en place sur l'appareil de lecture de contour (10) à étalonner, à la place d'une monture de lunettes, dans une position prédéterminée vis-à-vis desdites mâchoires (13A, 13B), un calibre étalon selon l'une quelconque des revendications 1 à 18, et en ce qu'on fait coopérer ledit palpeur (15) avec lesdites nervures transversales (58).

## Patentansprüche

1. Eichkaliber zum Eichen einer Konturlesvorrichtung (10), mit einerseits zwei Klemmbacken (13A, 13B), die sich im allgemeinen parallel zueinander erstrecken, und von denen eine zumindest seitlich bezüglich ihrer Erstreckungsrichtung (D) beweglich bezüglich der anderen ist und andererseits mit einem Fühler (15), der von einem Lesewagen (30) getragen wird, welcher linear beweglich auf einer Platte (31) montiert ist, wobei diese Platte (31) selbst winkeldrehbeweglich auf einem Transferwagen (40) montiert ist, der linear beweglich entlang eines Weges (T) montiert ist, der im allgemeinen parallel zur Erstreckungsrichtung (D) der Klemmbacken (13A, 13B) liegt, wobei das Eichkaliber dadurch gekennzeichnet ist, dass es umfasst:
- Einrichtungen (51, 55) zum Einsetzen in die zu eichende Konturlesevorrichtung (10) anstelle der Brillenfassung, in einer vorbestimmten Position gegenüber den zwei Klemmbacken (13A, 13B); und
- eine Platte (50), mit zumindest zwei über diese hinausstehenden Rippen (58), die hier als seitliche Rippen bezeichnet sind, welche im wesentlichen parallel zueinander liegen, gemäß einer ersten Richtung (D1), die gemäß einer zweiten Richtung (D2) bezüglich einander geeicht sind, wobei die seitlichen Rippen zur Kooperation mit dem Fühler (15) ausgebildet sind, wenn sich das Kaliber in der Konturlesevorrichtung befindet.

2. Eichkaliber nach Anspruch 1, dadurch gekennzeichnet, dass die seitlichen Rippen (58) gerade Flanken (59, 60) haben, wobei sich diese beiden Flanken (59, 60) rechtwinklig zu der Platte (50) erstrecken.

3. Eichkaliber nach einem der Ansprüche 1, 2, dadurch gekennzeichnet, dass die seitlichen Rippen (58) gradlinig sind.

4. Eichkaliber nach einem der Ansprüche 1 bis 3, dadurch gekennzeichnet, dass es andererseits vorstehend über die Platte (50) zumindest eine weitere Rippe (61) aufweist, die hier als Längsrippe bezeichnet ist, welche sich gemäß einer zweiten Richtung (D2) erstreckt.

5. Eichkaliber nach Anspruch 4, dadurch gekennzeichnet, dass die Längsrippe (61) gerade Flanken (62, 63) hat, wobei sich diese Flanken (62, 63) rechtwinklig zu der Platte (50) erstrecken.

6. Eichkaliber nach einem der Ansprüche 4, 5, dadurch gekennzeichnet, dass die Längsrippe (61) geradlinig ist.

7. Eichkaliber nach einem der Ansprüche 4 bis 6, dadurch gekennzeichnet, dass die Längsrippe (61) im wesentlichen orthogonal zu den seitlichen Rippen (58) ist.

8. Eichkaliber nach einem der Ansprüche 4 bis 7, dadurch gekennzeichnet, dass es vorstehend über die Platte (50) in einem Abstand zueinander zwei Längsrippen (61) aufweist.

9. Eichkaliber nach Anspruch 8, dadurch gekennzeichnet, dass die zwei seitlichen Rippen (58) und die zwei Längsrippen (61) kontinuierlich miteinander ausgebildet sind und so zusammen einen Rahmen (64) bilden.

10. Eichkaliber nach Anspruch 9, dadurch gekennzeichnet, dass die Winkel (65) des Rahmens (64) abgerundet sind.

11. Eichkaliber nach einem der Ansprüche 1 bis 10, dadurch gekennzeichnet, dass andererseits vorstehend über die Platte (50) ein Positionierring (67) vorgesehen ist, der zur Aufnahme einer Schablone (68) mit zwei parallelen Stiften (69) versehen ist.

12. Eichkaliber nach Anspruch 11, dadurch gekennzeichnet, dass der Positionierring (67) axial zwischen den Stiften (69) eine Gewindenabe (70) aufweist.

13. Eichkaliber nach den Ansprüchen 9 und 11, dadurch gekennzeichnet, dass der Positionierring (67) sich zur Mitte des Rahmens (64) erstreckt.

14. Eichkaliber nach einem der Ansprüche 1 bis 13, dadurch gekennzeichnet, dass die Platte (50) lokal entlang einer ihrer Ränder, überstehend über ihre Scheibe, eine Zentrierverlängerung (55) aufweist.

15. Eichkaliber nach Anspruch 14, dadurch gekennzeichnet, dass die Zentrierverlängerung (55) der Platte (50) sich im allgemeinen auf mittlerer Distanz der seitlichen Rippen (58) erstreckt.

16. Eichkaliber nach einem der Ansprüche 14, 15, dadurch gekennzeichnet, dass die Zentrierverlängerung (55) der Platte (50) eine im wesentlichen trapezoidale Kontur hat.

17. Eichkaliber nach einem der Ansprüche 1 bis 16, dadurch gekennzeichnet, dass es rechtwinklig zu der Platte (50) entlang zumindest einer der Ränder derselben einen Rücksprung (51) aufweist, der sich beiderseits der Platte (50) erstreckt und der auf der einen Seite desselben eine Einkerbung (52) aufweist, die ihn in zwei Füße (53) unterteilt.

18. Eichkaliber nach Anspruch 17, dadurch gekennzeichnet, dass es vier Rücksprünge (51) aufweist, die in Füße (53) unterteilt sind, nach Maßgabe eines Rücksprungs (51) im Winkel zu der Platte (50).

19. Verfahren zum Eichen einer Konturlesevorrichtung (10) mit einerseits zwei Klemmbacken (13A, 13B), die sich im wesentlichen parallel zueinander erstrecken, und von denen zumindest eine seitlich bezüglich der Erstreckungsrichtung (D) beweglich bezüglich der anderen ist, und andererseits einem Fühler (15), der von einem Lesewagen (30) getragen wird, welcher linear beweglich auf einer Platte (31) montiert ist, wobei die Platte (31) selbst winkeldrehbeweglich auf einem Transferwagen (40) montiert ist, welcher linear gemäß eines Weges (T) beweglich montiert ist, im wesentlichen parallel zur Erstreckungsrichtung (D) der Klemmbacken (13A, 13B); dadurch gekennzeichnet, dass man in der zu eichenden Konturlesevorrichtung (10) anstelle einer Brillenfassung in einer vorbestimmten Position gegenüber den Klemmbacken (13A, 13B) ein Eichkaliber gemäß einem der Ansprüche 1 bis 18 anordnet, und dadurch, dass man den Fühler (15) mit den seitlichen Rippen (58) zusammenwirken lässt.

## Claims

1. A calibration gauge for calibrating a contour reading apparatus (10) comprising, on the one hand, two jaws (13A, 13B) which are generally elongate parallel to each other and one at least of which is movable with respect to the other transversely with respect to their direction of elongation (D) and, on the other hand, a feeler (15) which is carried by a reading carriage (30) mounted movably linearly on a plate (31), said plate (31) itself being mounted angularly rotatably on a transfer carriage (40) mounted movably linearly along a path (T) generally parallel to the direction of elongation (D) of the jaws (13A, 13B), the calibration gauge being characterised in that it comprises:
- means (51, 55) for setting it in place on the contour reading apparatus (10) to be calibrated, in the place of a spectacles frame, in a predetermined position in relation to the two jaws (13A, 13B); and
- a plate portion (50) with, in projecting relationship thereon, at least two ribs (58), referred to herein as transverse ribs, which, being generally parallel to each other, in a first direction (D1), are displaced relative to each other in a second direction (D2), said transverse ribs, when said gauge is thus in place on the contour reading apparatus, being adapted to co-operate with the feeler (15).

2. A calibration gauge according to claim 1 characterised in that the transverse ribs (58) have straight sides (59, 60), both of said sides (59, 60) extending perpendicularly to the plate portion (50).

3. A calibration gauge according to either one of claims 1 and 2 characterised in that the transverse ribs (58) are straight.

4. A calibration gauge according to any one of claims 1 to 3 characterised in that it also has in projecting relationship on its plate portion (50) at least one other rib (61), referred to herein as the longitudinal rib, which is elongate in the second direction (D2).

5. A calibration gauge according to claim 4 characterised in that the longitudinal rib (61) has straight sides (62, 63), both of said sides (62, 63) extending perpendicularly to the plate portion (50).

6. A calibration gauge according to either one of claims 4 and 5 characterised in that the longitudinal rib (61) is straight.

7. A calibration gauge according to any one of claims 4 to 6 characterised in that the longitudinal rib (61) is generally orthogonal with respect to the transverse ribs (58).

8. A calibration gauge according to any one of claims 4 to 7 characterised in that it has two longitudinal ribs (61) in projecting relationship on its plate portion (50) at a spacing from each other.

9. A calibration gauge according to claim 8 characterised in that the two transverse ribs (58) and the two longitudinal ribs (61) are continuous with each other and thus jointly form a frame (64).

10. A calibration gauge according to claim 9 characterised in that the corners (65) of the frame (64) are rounded.

11. A calibration gauge according to any one of claims 1 to 10 characterised in that it also has in projecting relationship on its plate portion (50) a boss (67) which, for receiving a template (68), is fitted with two parallel lugs (69).

12. A calibration gauge according to claim 11 characterised in that the boss (67) axially comprises between the lugs (69) a threaded hub (70).

13. A calibration gauge according to claims 9 and 11 in combination characterised in that the boss (67) extends at the centre of the frame (64).

14. A calibration gauge according to any one of claims 1 to 13 characterised in that the plate portion (50) locally comprises along one of its edges in projecting relationship on its edge face a centring extension (55).

15. A calibration gauge according to claim 14 characterised in that the centring extension (55) of the plate portion (50) extends generally halfway between the transverse ribs (58).

16. A calibration gauge according to either one of claims 14 and 15 characterised in that the centring extension (55) of the plate portion (50) is of a generally trapezoidal contour.

17. A calibration gauge according to any one of claims 1 to 16 characterised in that perpendicularly to its plate portion (50) and along one of the edges at least thereof it comprises a flange portion (51) which extends on respective sides of the plate portion (50) and which in line therewith has a notch (52) dividing it into two legs (53).

18. A calibration gauge according to claim 14 characterised in that it has four flange portions (51) divided into legs (53), with one flange portion (51) per corner of the plate portion (50).

19. A process for calibrating a contour reading apparatus (10) comprising, on the one hand, two jaws (13A, 13B) which are generally elongate parallel to each other and one at least of which is movable with respect to the other transversely with respect to their direction of elongation (D) and, on the other hand, a feeler (15) which is carried by a reading carriage (30) mounted movably linearly on a plate (31), said plate (31) itself being mounted angularly rotatably on a transfer carriage (40) mounted movably linearly along a path (T) generally parallel to the direction of elongation (D) of the jaws (13A, 13B), characterised in that a calibration gauge according to any one of claims 1 to 18 is set in place on the contour reading apparatus (10) to be calibrated in place of a spectacles frame, in a predetermined position in relation to said jaws (13A, 13B), and that said feeler (15) is caused to co-operate with said transverse ribs (58).
